# FASCICULE DE BREVET EUROPEEN

(11) **EP 3 209 913 B1**
(45) Date de publication et mention de la délivrance du brevet: **27.03.2019**
(21) Numéro de dépôt: 15785101.5
(22) Date de dépôt: 26.10.2015
(51) Int. Cl.: F16K 17/16, G21C 9/008

(54) **DISQUE DE RUPTURE POUR UN DISPOSITIF DE PROTECTION CONTRE LES SURPRESSIONS A L'INTERIEUR D'UN EQUIPEMENT, APPLICATION A UN EQUIPEMENT DESTINE A CONTENIR SUCCESSIVEMENT DEUX GAZ DE NATURE CHIMIQUE DIFFERENTE**
BERSTSCHEIBE FÜR EINE VORRICHTUNG ZUM SCHUTZ GEGEN ÜBERDRÜCKE IN EINER VORRICHTUNG, VERWENDUNG IN EINER VORRICHTUNG ZUR AUFEINANDERFOLGENDEN AUFNAHME VON ZWEI GASEN VON UNTERSCHIEDLICHER CHEMISCHER NATUR
RUPTURE DISC FOR A DEVICE FOR PROTECTING AGAINST OVERPRESSURES INSIDE A DEVICE, USE IN AN APPARATUS INTENDED FOR CONSECUTIVELY CONTAINING TWO GASES OF SEPARATE CHEMICAL NATURE

(30) Priorité: 24.10.2014 FR 1460239
(43) Date de publication de la demande: 30.08.2017
(73) Titulaire: Commissariat à l'Énergie Atomique et aux Énergies Alternatives, 75015 Paris (FR)
(72) Inventeur: MORO-LE GALL, Isabelle, F-38600 Fontaine (FR); BRIOTTET, Laurent, F-38430 Moirans (FR)
(74) Mandataire: Nony
(86) Numéro de dépôt international: PCT/EP2015/074714
(87) Numéro de publication internationale: WO 2016/062895

(56) Documents cités:
- JP-A- H10 156 443
- US-A1- 2010 140 264

## Description

### Domaine technique

La présente invention concerne le domaine des dispositifs de sureté permettant la protection des équipements sous pression contre un excès de pression et/ou un excès de vide.

Elle a trait plus particulièrement à un nouveau disque de rupture constituant un dispositif de ce type.

### Etat de la technique

La mise en oeuvre et la description de l'ensemble des dispositifs permettant la protection des équipements sous pression contre un excès de pression fait notamment l'objet de la norme française NF EN ISO 4126.

Une revue de cette norme montre qu'actuellement il existe essentiellement quatre types de dispositifs que l'on peut énumérer comme suit :
1) les disques de rupture,
2) les soupapes de sûreté,
3) les dispositifs combinant l'utilisation de disques de rupture et de soupapes de sûreté,
4) les dispositifs dits « de Sureté à Décharge Contrôlée contre les Surpressions » (DSDCS).

Les disques de rupture, qui font l'objet de la norme NF EN ISO 4126-2 sont des dispositifs actionnés par pression différentielle entre l'intérieur et l'extérieur de l'équipement qu'ils protégent et sont conçus pour fonctionner par rupture, c'est-à-dire par déchirement de matière.

Plus précisément, un disque de rupture est constitué d'une pièce qui contient la pression, qui est sensible à la pression interne à l'équipement sous pression et qui est conçue pour s'ouvrir en se rompant à une pression déterminée. Cette rupture permet de libérer le gaz contenu dans l'équipement sous pression et entraîne ainsi une chute de sa pression interne. Un disque de rupture de forme bombée avec deux entailles réalisées sur les deux faces est connu de JP H10 156443 A.

Parmi les disques de rupture existants, on peut les distinguer en fonction de leurs géométries particulières, qui constituent l'essentiel du marché :
- les disques de rupture de forme bombée, c'est-à-dire avec une forme bombée vers l'extérieur de l'équipement sous pression qu'ils protègent,
- les disques de rupture de forme bombée inverse, c'est-à-dire avec une forme bombée vers l'inttérieur de l'équipement sous pression qu'ils protègent,
- les disques de rupture de forme plane.

Les disques de rupture existants peuvent être réalisés en un seul matériau ou en multi-matériaux. Ils sont tous conçus pour rompre à une seule valeur de pression P, qui est la pression de rupture spécifiée, pour l'utilisation visée. La valeur de P est fonction de la température mais indépendante de la nature du gaz contenu dans l'équipement sous pression. En pratique, la valeur de P est fournie par le constructeur avec une tolérance de performance.

Ainsi, les disque de rupture permettent par un moyen technique simple la protection des équipements sous pression contre un excès de vide, ou un excès de pression. Dans ce dernier cas, comme mentionné ci-avant, la rupture du disque intervient dès que la pression interne à l'équipement égale la pression de rupture spécifiée, à la valeur de tolérance près, et ceci indépendamment de la nature chimique de gaz contenu dans l'équipement.

La fragilisation par l'hydrogène des aciers, souvent désignée par l'acronyme FPH, est un phénomène causé par l'interaction entre l'hydrogène et les aciers. L'interaction consiste en l'adsorption d'hydrogène à la surface de l'acier et éventuellement la diffusion de l'hydrogène dans son volume. En fonction de multiples paramètres liés au matériau, tels que sa microstructure, ses caractéristiques mécaniques..., et à son environnement, tels que la fugacité de l'hydrogène, la température..., cette interaction peut entraîner une rupture prématurée de l'acier, et donc une rupture franche des équipements concernés. Cette rupture prématurée, désignée génériquement sous le terme de fragilisation, se traduit généralement en termes de comportement mécanique de l'acier par une diminution de sa ductilité. L'ampleur de cette diminution dépend des paramètres cités précédemment.

La littérature sur ce sujet montre très nettement l'importance et la criticité de ce phénomène dans de nombreux domaines, tels que la pétrochimie, la métallurgie ou bien encore l'industrie nucléaire.

Ainsi, le constructeur d'un équipement sous pression, dont les parois métalliques, généralement en acier, peuvent être concernées par la fragilisation, doit prendre en considération ce phénomène.

En particulier, un tel équipement peut être amené à subir, durant son fonctionnement, et de façon successive, la pression d'un gaz neutre puis de l'hydrogène.

Dans ce cas, le constructeur de l'équipement peut souhaiter, par mesure de sécurité, baisser la valeur de la pression maximale admissible sous hydrogène par rapport à celle sous gaz neutre.

Or, à ce jour, il n'existe pas de dispositif de protection des équipements sous pression contre un excès de pression adapté pour, selon la nature chimique du gaz dans l'équipement, accommoder automatiquement la valeur de pression qui conduit à la rupture du dispositif.

Il existe donc un besoin d'amélioration des dispositifs de protection des équipements sous pression, notamment en vue de les adapter, selon la nature chimique du gaz dans l'équipement, à accommoder automatiquement la valeur de pression qui conduit à leur rupture du dispositif.

Le but général de l'invention est de répondre au moins en partie à ce besoin.

Un but particulier est de proposer un dispositif qui réponde au but général, qui soit simple à réaliser, fiable et peu coûteux.

### Exposé de l'invention

Pour ce faire, l'invention a pour objet un disque de rupture pour dispositif de protection contre les surpressions à l'intérieur d'un équipement, le disque étant constitué d'une pièce de forme générale circulaire comprenant deux faces planes sensiblement parallèles entre elles, et deux entailles localisées chacune selon une circonférence, les circonférences des deux entailles étant différentes l'une de l'autre, l'entaille localisée sur la plus grande circonférence étant réalisée sur l'une des faces planes, dite face inférieure, tandis que l'entaille localisée sur la plus petite circonférence est réalisée sur l'autre des faces planes, dite face supérieure.

Selon un mode de réalisation avantageux, l'entaille localisée sur la face supérieure est adaptée pour rompre à une première pression P0 tandis que l'entaille localisée sur la face inférieure est adaptée pour rompre à une deuxième pression P1 différente de P0.

En ce qui concerne la mise en place du disque de rupture selon l'invention, la face inférieure du disque qui présente l'entaille circonférentielle de plus grand diamètre est placée en contact direct avec la pression contenue dans l'équipement à protéger.

La face supérieur du disque ne voit donc pas la pression interne à l'équipement et est à la pression atmosphérique sous gaz neutre ou à l'air.

Ainsi, les inventeurs de la présente invention ont pensé judicieusement à différencier les amorces de rupture d'un disque de rupture en fonction des gaz sous pression contenus dans l'équipement.

Ils ont en outre analysé la localisation possible de ces amorces de rupture et sont parvenus à la conclusion qu'il était nécessaire de localiser une amorce de rupture ou entaille sur chacune des deux faces planes du disque.

En effet, si les entailles étaient localisées toutes les deux sur la face supérieure du disque destinée à ne pas être en contact direct avec la pression de l'équipement, alors ces entailles ne seraient pas fragilisées par le(s) gaz, tel que l'hydrogène. En conséquence, l'endroit principal de la fragilisation du disque aurait lieu sur sa face opposée, i.e. la face inférieure, au niveau de son encastrement avec l'élément d'appui du dispositif de protection. La pression de rupture deviendrait alors extrêmement sensible à la présence de défauts (rayures) sur la face inférieure du disque au niveau de l'encastrement, et la pression de rupture sous le gaz, tel que l'hydrogène serait donc très aléatoire. Autrement dit, il ne serait pas possible de garantir une bonne fiabilité.

Au contraire, si les entailles étaient localisées toutes les deux sur la face inférieure du disque, il serait très délicat d'arriver à dimensionner le disque de telle sorte que le fond des deux entailles soit sollicité en traction et non en compression. La fragilisation par le gaz, tel que l'hydrogène, se rapporterait alors au niveau de l'encastrement sur la face inférieure du disque, et la même problématique que précédemment de contrôle de la pression de rupture aurait lieu.

Il va de soi qu'un homme de l'art veillera à dimensionner avec soin les paramètres géométriques du disque, tels que l'épaisseur, le diamètre, et ceux des entailles, tels que la profondeur, le rayon en fond d'entaille, la localisation dans le disque, afin d'obtenir les pressions de rupture voulues.

L'homme de l'art peut réaliser ce dimensionnement au moyen d'un logiciel de calcul aux éléments finis. Il peut s'agir du logiciel de dénomination Cast3M développé par la demanderesse et disponible commercialement. Il peut s'agir également du logiciel dénommé commercialement abaqus. Tout autre logiciel de calcul aux éléments finis peut convenir.

Les inventeurs ont réalisé le dimensionnement d'un disque de rupture selon l'invention au moyen du logiciel Cast3M selon la procédure suivante.
- dans un premier temps, une évaluation des caractéristiques mécaniques du matériau du disque de rupture a été réalisée sous gaz neutre, en effectuant des essais de traction et de mécanique de la rupture, notamment des essais de ténacité,
- dans un second temps, une évaluation de la sensibilité du matériau à la fragilisation par l'hydrogène a été menée, en effectuant des essais de traction sous diverses pressions d'hydrogène et pour de multiples vitesses de déformation. L'objectif de ces essais sous pressions d'hydrogène est de cerner le comportement général du matériau sous hydrogène.

Une simulation via un logiciel aux éléments finis est alors faite du disque avec ses entailles, soumis à une pression croissante de gaz au niveau de sa face inférieure. Les évolutions avec la pression de gaz des champs de contrainte et de déformation en pointes des deux entailles sont analysées.

Un processus itératif de modification des paramètres de la géométrie du disque entaillé, tels que le rayon des entailles et leur profondeur, est alors réalisé jusqu'à ce que l'ensemble des paramètres géométriques du disque permettent d'obtenir les pressions de rupture souhaitées sous hydrogène et sous gaz neutre.

Les inventeurs de la présente invention ont donc défini une géométrie spécifique de disque de rupture qui permet un ajustement automatique de la pression de rupture du disque en fonction de la nature chimique du gaz sous pression dans l'équipement.

Ainsi, si le gaz est un gaz neutre, la pression de rupture du disque est égale à P0. Si le gaz est de l'hydrogène, la pression de rupture est égale à P1. P0 est strictement supérieure à P1. La différence en valeur absolue entre P0 et P1 est supérieure à la tolérance sur la pression de rupture sous gaz neutre.

L'accommodement de la valeur de la pression de rupture du disque selon la nature chimique du gaz sous pression dans l'équipement se fait automatiquement sans besoin d'intervention d'une tierce personne.

L'une et/ou l'autre des entailles peu(ven)t être continue (s) ou discontinue (s) sur sa circonférence.

La pièce constituant le disque de rupture peut être avantageusement en un acier choisi parmi les aciers ferritiques, martensitiques, ferrito-bainitiques, bainitiques, ferrito-martensitiques, ferrito-perlitiques, de préférence de grade API X80, perlitiques.

Un disque de rupture et ses entailles selon l'invention peuvent présenter les dimensions préférées suivantes
- la pièce a une épaisseur de 1 à 5 mm.
- la profondeur des entailles est inférieure ou égale à une valeur correspondant à environ 70% de l'épaisseur de la pièce.
- le rayon en fond des entailles est compris entre 0,1 et 0,6 mm.
- l'angle d'ouverture des entailles étant inférieur ou égal à 50°.

Ces dimensions préférées sont mises en oeuvre avantageusement, pour des pressions de rupture sous gaz neutre et H2 comprises entre 250 et 550 bar, et pour une pièce en acier sensible à la FPH, tel qu'un acier choisi parmi les aciers ferritiques, certains aciers martensitiques, aciers ferrito perlitiques.

L'invention a également pour objet, selon un autre de ses aspects, un équipement, destiné à contenir successivement deux gaz de nature chimique différente, tels que l'hélium et l'hydrogène, comprenant :
- une paroi dans laquelle est pratiquée une ouverture;
- un dispositif de protection de l'équipement contre les surpressions comprenant :
   - un disque de rupture tel que décrit précédemment, dont la face inférieure est en contact direct avec la pression contenue dans l'équipement,
   - au moins un élément d'appui, adapté pour appuyer le disque contre la paroi avec les entailles du disque sur l'ouverture.

Le dispositif de protection de l'équipement peut comprendre avantageusement :
- des moyens d'étanchéité agencés entre la périphérie du disque et la paroi autour de l'ouverture,
- au moins un élément de maintien, dit chapeau de fermeture, en appui contre l'élément d'appui, et fixé par serrage à l'équipement de telle sorte à maintenir l'élément d'appui et le disque de rupture sur l'équipement et à garantir l'étanchéité au niveau des moyens d'étanchéité.

De préférence, l'élément d'appui est une bague dont la face inférieure est en appui contre la face supérieure du disque et dont l'ouverture est agencée en regard de l'ouverture de la paroi.

L'équipement peut comprendre en outre des moyens d'étanchéité agencés entre la périphérie de la bague et le chapeau de fermeture. Ces moyens d'étanchéité sont de préférence constitués par un ou plusieurs joints toriques.

Selon une variante de réalisation, le chapeau de fermeture et l'équipement sont percés respectivement de trous filetés en regard les uns des autres pour loger les vis de serrage du chapeau de fermeture à l'équipement.

L'invention a enfin pour objet l'utilisation de l'équipement décrit ci-avant pour contenir sous pression deux gaz de nature chimique différente, tels que l'hélium (He) et l'hydrogène (H2). Une utilisation avantageuse est celle où l'équipement est un équipement de production et du stockage d'hydrogène.

### Description détaillée

D'autres avantages et caractéristiques de l'invention ressortiront mieux à la lecture de la description détaillée de l'invention faite à titre illustratif et non limitatif en référence aux figures suivantes parmi lesquelles :
- la figure 1 est une vue d'une face d'un exemple de disque de rupture selon l'invention,
- la figure 2 est une vue de la face opposée du disque de rupture selon la figure 1,
- la figure 2A est une vue en coupe longitudinale du disque de rupture selon les figures 1 et 2,
- la figure 3 est une vue en perspective d'un exemple de bague d'appui selon l'invention, adaptée pour mettre en appui le disque de rupture des figures 1 à 2A contre une paroi autour d'une ouverture d'un équipement sous pression à protéger,
- la figure 3A est une vue de face de la bague d'appui selon la figure 3,
- la figure 3B est une vue en coupe longitudinale de la bague d'appui selon les figures 3 et 3A,
- les figures 4A et 4B sont des vues en perspective et en coupe partielle d'un équipement sous pression sur lequel est fixé un dispositif de protection comprenant le disque de rupture et la bague d'appui selon l'invention,
- la figure 5 est une vue schématique en coupe longitudinale d'un disque de rupture avec une bague d'appui selon l'invention, montrant l'action d'un gaz en surpression sur le disque au cours d'essais de validation,
- les figures 6A et 6B sont des reproductions photographiques d'un disque de rupture selon l'invention ayant rompu sous une pression donnée d'hélium, respectivement vu du côté de la face inférieure et de la face supérieure,
- les figures 7A et 7B sont des reproductions photographiques d'un disque de rupture selon l'invention ayant rompu sous une pression donnée d'hydrogène, respectivement vu du côté de la face inférieure et de la face supérieure.

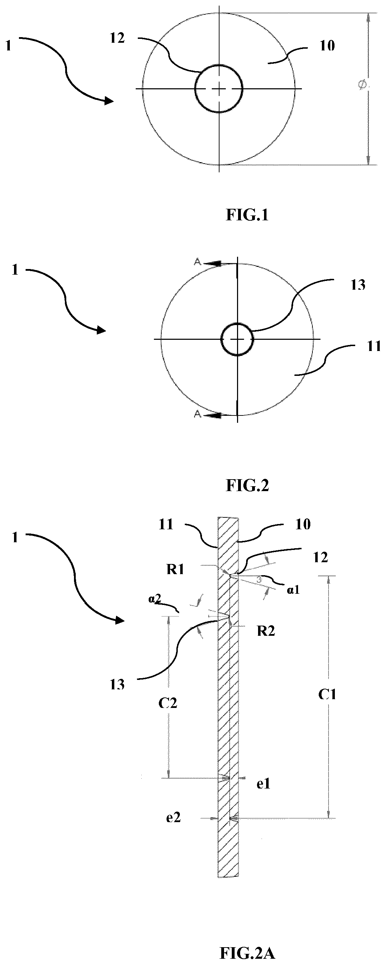

Tel qu'illustré en figures 1 à 2A, le disque de rupture 1 selon l'invention est une pièce circulaire de diamètre Ø dont une face plane 10 est entaillée d'une entaille continue 12 de forme circulaire C1, d'angle d'ouverture al, de rayon de fond d'entaille R1 et de profondeur d'entaille e1.

L'autre face plane 11 du disque 1 est également entaillée d'une entaille continue 13 de forme circulaire C2, d'angle d'ouverture a2, de rayon de fond d'entaille R2 et de profondeur d'entaille e2.

Les circonférences C1, C2 des deux entailles 12, 13 sont concentriques et dont le centre coïncide avec celui du disque 1.

A titre d'exemple, les dimensions sont les suivantes :
- épaisseur du disque el+e2 : 1,5mm, diamètre Ø : 58mm.
- diamètre C1 : 18mm, profondeur e1 : 0,65mm, rayon de fond R1 : 0,1mm, ouverture al de 30°.
- diamètre C2 : 12mm, profondeur e2 : 0,85mm, rayon de fond R2 : 0,1mm, ouverture α2 de 30°.

Le disque 1 peut être avantageusement en acier ferrito-perlitique pour une utilisation avec de l'hydrogène.

Le matériau constitutif de la bague doit être un acier de microstructure quelconque.

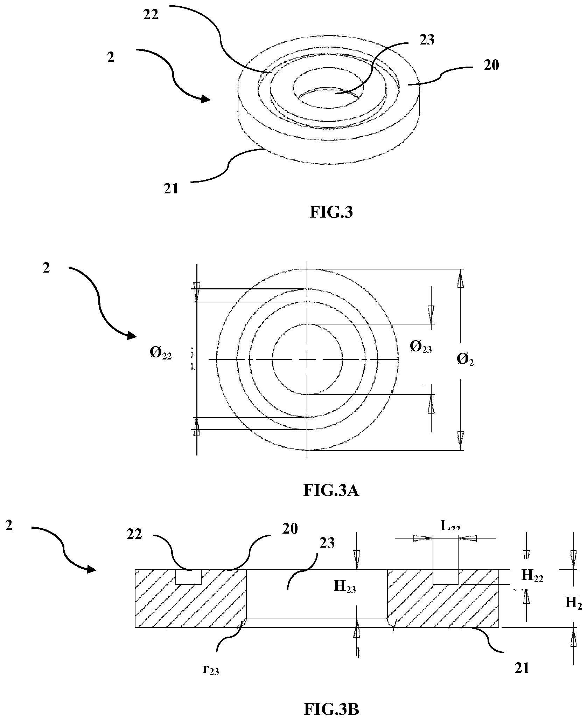

On a représenté en figures 3 à 3B une bague d'appui 2 adaptée pour appuyer le disque de rupture 1 selon l'invention contre une paroi d'un équipement sous pression à protéger.

Cette bague 2 est de section circulaire avec un diamètre Ø2 une épaisseur H2 et comprend une face supérieure 20 et une face inférieure 21. Cette face inférieure 21 définit le plan permettant de maintenir la face supérieure 11 du disque 1.

La face supérieure 20 est munie d'une gorge périphérique 22, de section rectangulaire de hauteur H22 et de largeur L22. Cette gorge 22 peut loger un joint d'étanchéité torique 6 adapté pour réaliser l'étanchéité finale du dispositif de protection de l'équipement comme détaillé ci-après.

La bague 2 est percée d'une ouverture centrale 23 également de section circulaire 23 de diamètre Ø23 sur une majeure partie de sa hauteur H23, un raccordement sous la forme d'un rayon de courbure r23 étant réalisé à la jonction avec la face inférieure 21. Le diamètre Ø23 ainsi que le rayon de courbure r23 sont à dimensionner selon les pressions de rupture voulues pour le disque sous gaz neutre et sous hydrogène.

A titre d'exemple, les dimensions sont les suivantes :
- diamètre de bague Ø2 : 58 mm, épaisseur H2 : 9,25mm,
- largeur de gorge L22 : 4mm, hauteur de gorge H22 : 2,4mm, diamètre extérieur de gorge Ø22 : 45mm
- diamètre de l'ouverture centrale Ø23: 22,5mm, hauteur H23 : 7,75 mm, rayon de courbure r23 :1,5mm.

La bague 2 est en acier austénitique inoxydable type 316L avec de préférence une nitruration de sa surface. Ce traitement surfacique permet de durcir l'acier en surface et ainsi de s'assurer qu'en cas de rupture du disque 1, la bague 2 ne sera pas endommagée.

D'autres matériaux peuvent être envisagés pour la réalisation de la bague 2. Quel que soit le matériau de la bague envisagé, il est choisi de sorte que la résistance mécanique de la bague 2 soit supérieure à celle du disque 1, c'est-à-dire qu'à une pression donnée, le disque 1 se déforme et en aucun cas la bague 2.

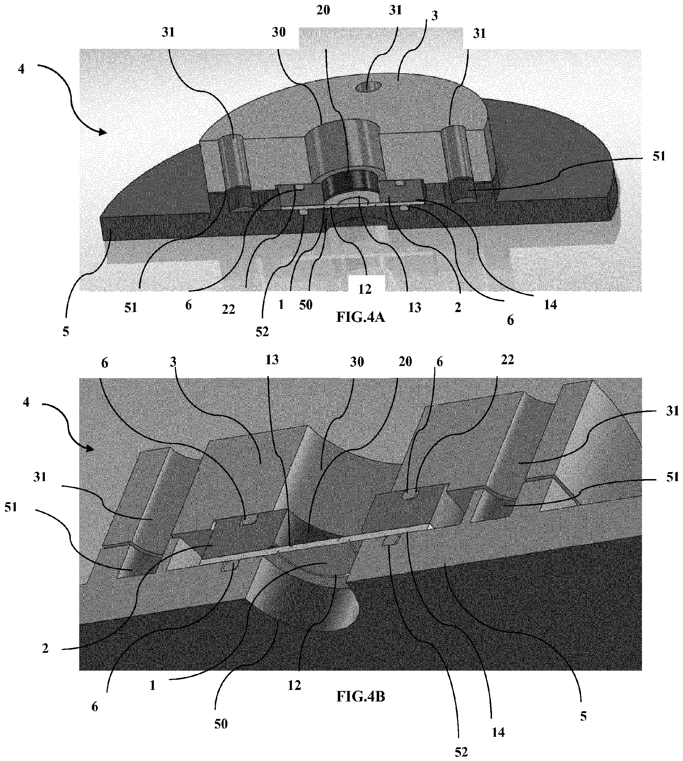

On a représenté en figures 4A et 4B un exemple de fixation d'un dispositif de protection 4 intégrant le disque de rupture 1 et la bague 2 selon l'invention, à un équipement 5 destiné à contenir successivement deux gaz de nature chimique différente, à savoir l'hélium et l'hydrogène.

Une paroi de l'équipement 5 est percée d'une ouverture circulaire 50 sur laquelle la face inférieure 10 du disque est positionnée et maintenue. La face inférieure 10 avec son entaille 12 sont donc en contact direct avec la pression à l'intérieur de l'équipement 5.

La face supérieure 11 du disque 1 est maintenue contre la paroi de l'équipement 5 autour de l'ouverture 50 par la bague 2. Plus précisément, la partie périphérique 14 du disque est encastrée entre la paroi de l'équipement 5 et la bague 2 tandis que les entailles 12, 13 sont centrées sur l'ouverture 50 de la paroi et l'ouverture centrale 20 de la bague 2.

Le disque 1 et la bague 2 sont maintenus en place sur l'équipement 5 à protéger par un chapeau de fermeture 3 vissé dans la paroi de l'équipement. Le chapeau de fermeture 5 également de forme générale circulaire comprend une ouverture centrale 30 positionnée en regard de l'ouverture centrale 20 de la bague 2.

Bien que non représentés, les vis de serrage viennent se visser dans les trous filetés 31, 51 respectivement réalisés dans le chapeau de fermeture 3 et la paroi d'équipement 5.

L'étanchéité entre l'intérieur de l'équipement 5 et l'extérieur est réalisée par l'intermédiaire de deux joints toriques 6.

Un des joints 6 est positionné entre l'équipement 5 sous pression et le disque de rupture 1. Comme illustré en figures 4A et 4B, ce joint 6 peut être logé dans une gorge 52 prévue à cet effet dans la paroi d'équipement 5.

L'autre des joints 6 est positionné entre la bague 2 et le chapeau de fermeture 3. Il n'est pas impératif de prévoir cet autre joint 6. S'il s'avère nécessaire de ne pas avoir de fuite de gaz entre le chapeau 3 et la bague 2, alors l'implantation de cet autre joint 6 entre ces deux éléments 2, 3 est impérative. Cela est le cas par exemple si l'équipement 5 est localisé à l'intérieur d'un bâtiment/structure/installation et si le gaz doit ensuite être canalisé dans un tuyau pour être évacué à l'extérieur.

A contrario, si par exemple l'équipement 5 est localisé à l'extérieur, alors l'implantation de cet autre joint 6 n'est pas impérative. Cela est le cas par exemple lorsque l'équipement 5 est une citerne de stockage de gaz mise à l'air libre. Comme illustré en figures 4A et 4B, cet autre joint 6 peut être logé dans la gorge 22 de la bague 2.

Les joints 6 peuvent être en élastomère. Avantageusement, si l'équipement 5 est prévu pour rester de longues durées sous pression d'hydrogène, au moins le joint 6 entre le disque de rupture 1 et l'équipement 5 est en indium.

Le couple de serrage appliqué au chapeau de fermeture 3 permet d'assurer à la fois le maintien du dispositif de protection 4 contre l'équipement 5 et l'étanchéité au niveau des joints 6.

Les inventeurs ont procédé à des essais de validation d'un dispositif de protection 4 selon l'invention. On précise ici que, pour ces essais de validation, les dimensions du disque de rupture 1 et de la bague 2 sont celles données à titre d'exemples ci-avant. On précise également que, pour ces essais de validation, le disque de rupture 1 utilisé a été réalisé en acier ferrito-perlitique de grade API X80 et la bague 2 a été réalisée en acier 316L avec une nitruration de sa surface.

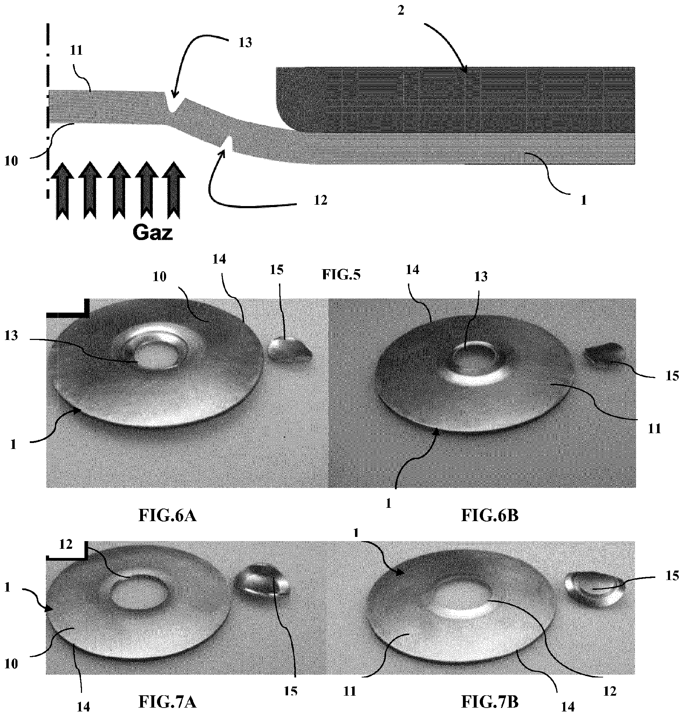

Le dispositif 4 a été validé en utilisant une cellule d'éclatement de disque, moyen d'essai à l'origine développé par la demanderesse dans son centre d'études situé à Valduc. Le schéma des essais dans cette cellule d'éclatement est montré en figure 5.

Une pression croissante d'hélium avec une montée en pression à 20bar/min, a été appliquée sous le disque 1 jusqu'à sa rupture. Trois essais ont été successivement réalisés sur trois disques différents.

Puis, trois nouveaux essais ont été effectués sous une pression croissante d'hydrogène (pureté 99,9999%) sur trois disques différents.

Les résultats des essais sont présentés dans le tableau ci-dessous.

**TABLEAU**

| **Gaz** | **Pression de rupture P_{R}(bar)** | **Localisation de la rupture** |
|---|---|---|
| Hélium | 487H | Entaille 13 |
| | 500 | |
| | 516 | |
| Hydrogène | 335 | Entaille 12 |
| | 296 | |
| | 392 | |

De ce tableau, il ressort que la pression de rupture du disque 1 sous hydrogène est systématiquement significativement inférieure, d'environ 30%, à celle observée sous hélium.

De plus, sous hélium elle intervient sur l'entaille supérieure 13, alors que sous hydrogène la rupture intervient toujours au niveau de l'entaille inférieure 12. Cela est montré respectivement aux figures 6A et 6B pour la rupture sous hélium et aux figures 7A et 7B pour la rupture sous hydrogène, où l'on voit la différence de taille des opercules 15 déchirés.

Deux essais supplémentaires ont été effectués sous hydrogène afin de valider que les résultats d'essai précédents sont indépendants de la vitesse de montée en pression du gaz. Ainsi, les deux essais supplémentaires ont été les suivants :
- un premier essai a été effectué à 6,7x10⁻² bar/min. Les résultats sont comparables à ceux obtenus sous hydrogène à 20 bar/min.
- un deuxième essai a été effectué à 2400 bar/min. Les résultats de l'essai sont également comparables à ceux obtenus sous hydrogène à 20 bar/min.

En conclusion, le dispositif de protection 4 selon l'invention décrit ci-dessus permet donc bien d'accommoder la pression maximale admissible dans l'enceinte sous pression en fonction de la nature du gaz contenue, i.e. gaz neutre ou hydrogène.

L'équipement 5 destiné à être protégé par le dispositif de protection 4 peut être avantageusement un équipement utilisé dans le domaine de la production et du stockage énergétique d'hydrogène.

D'autres variantes et améliorations peuvent être mises en oeuvre sans pour autant sortir du cadre de l'invention qui vient d'être décrite.

Selon une utilisation préférée, un équipement avec un disque de rupture selon l'invention en tant que dispositif de protection contre les surpressions est prévu pour contenir successivement de l'hélium (He) et l'hydrogène (H2)

Mais, un équipement avec un disque de rupture selon l'invention peut être utilisé avantageusement pour contenir tous les autres gaz neutres existants.

En particulier, il peut être utilisé avec tous les gaz contenant une pression partielle en H₂.

## Revendications

1. Disque de rupture (1) pour dispositif (4) de protection contre les surpressions à l'intérieur d'un équipement (5), le disque (1) étant constitué d'une pièce de forme générale circulaire **caractérisé en ce qu'**il comprend deux faces planes (10, 11) sensiblement parallèles entre elles, et deux entailles (12, 13) localisées chacune selon une circonférence (C1, C2), les circonférences (C1, C2) des deux entailles étant différentes l'une de l'autre, l'entaille (12) localisée sur la plus grande circonférence étant réalisée sur l'une des faces planes (10), dite face inférieure, tandis que l'entaille (13) localisée sur la plus petite circonférence est réalisée sur l'autre des faces planes (11), dite face supérieure.

2. Disque de rupture selon la revendication 1, l'entaille (13) localisée sur la face supérieure étant adaptée pour rompre à une première pression P0 tandis que l'entaille (12) localisée sur la face inférieure est adaptée pour rompre à une deuxième pression P1 différente de P0.

3. Disque de rupture selon la revendication 1 ou 2, l'une et/ou l'autre des entailles étant continue (s) ou discontinue (s) sur sa circonférence.

4. Disque de rupture selon l'une quelconque des revendications précédentes, les circonférences des deux entailles étant concentriques l'une de l'autre.

5. Disque de rupture selon l'une quelconque des revendications précédentes, les circonférences des deux entailles étant centrées sur le centre de la pièce circulaire.

6. Disque de rupture selon l'une quelconque des revendications précédentes, la pièce étant en un acier choisi parmi les aciers ferritiques, martensitiques, ferrito-bainitiques, bainitiques, ferrito-martensitiques, ferrito-perlitiques, de préférence de grade API X80, perlitiques.

7. Disque de rupture selon l'une quelconque des revendications précédentes, la profondeur des entailles est inférieure ou égale à une valeur correspondant à environ 70% de l'épaisseur de la pièce.

8. Disque de rupture selon l'une quelconque des revendications précédentes, le rayon en fond des entailles est compris entre 0,1 et 0,6 mm.

9. Disque de rupture selon l'une quelconque des revendications précédentes, l'angle d'ouverture des entailles étant inférieur ou égal à 50°.

10. Equipement (5), destiné à contenir successivement deux gaz de nature chimique différente, tels que l'hélium et l'hydrogène, comprenant :
- une paroi dans laquelle est pratiquée une ouverture (50);
- un dispositif (4) de protection de l'équipement contre les surpressions comprenant :
• un disque de rupture (1) selon l'une des revendications précédentes, dont la face inférieure est en contact direct avec la pression contenue dans l'équipement,
• au moins un élément d'appui (2), adapté pour appuyer le disque contre la paroi avec les entailles du disque sur l'ouverture.

11. Equipement (5) selon la revendication 10, le dispositif de protection comprenant :
• des moyens d'étanchéité (6) agencés entre la périphérie du disque et la paroi autour de l'ouverture (50),
• au moins un élément de maintien (3), dit chapeau de fermeture, en appui contre l'élément d'appui, et fixé par serrage à l'équipement de telle sorte à maintenir l'élément d'appui et le disque de rupture sur l'équipement et à garantir l'étanchéité au niveau des moyens d'étanchéité.

12. Equipement (5) selon la revendication 10 ou 11, l'élément d'appui étant une bague dont la face inférieure (21) est en appui contre la face supérieure (11) du disque et dont l'ouverture (23) est agencée en regard de l'ouverture de la paroi.

13. Equipement (5) selon l'une des revendications 10 à 12, comprenant en outre des moyens d'étanchéité (6) agencés entre la périphérie de la bague et le chapeau (3) de fermeture.

14. Equipement (5) selon l'une des revendications 11 à 13, le chapeau de fermeture et l'équipement étant percés respectivement de trous filetés (31, 51) en regard les uns des autres pour loger les vis de serrage du chapeau de fermeture à l'équipement.

15. Utilisation de l'équipement selon l'une des revendications 10 à 14, notamment en tant qu'équipement de production et du stockage d'hydrogène, pour contenir sous pression deux gaz de nature chimique différente, tels que l'hélium (He) et l'hydrogène (H2).

## Patentansprüche

1. Berstscheibe (1) für eine Vorrichtung (4) zum Schutz gegen Überdrücke im Inneren einer Ausrüstung (5), wobei die Scheibe (1) von einem im Allgemeinen kreisförmigen Teil gebildet wird,
**dadurch gekennzeichnet, dass** sie zwei im Wesentlichen zueinander parallele, ebene Flächen (10, 11) und zwei Einkerbungen (12, 13) aufweist, welche jeweils auf einem Kreisumfang (C1, C2) angeordnet sind, wobei die Kreisumfänge (C1, C2) der beiden Einkerbungen zueinander verschieden sind, wobei die auf dem großen Kreisumfang angeordnete Einkerbung (12) auf einer der ebenen Flächen (10), so genannte untere Fläche, ausgeführt ist, während die auf dem kleineren Kreisumfang angeordnete Einkerbung (13) auf der anderen ebenen Fläche (11), so genannte obere, ausgeführt ist.

2. Berstscheibe nach Anspruch 1, wobei die auf dem großen Kreisumfang angeordnete Einkerbung (12) dafür angepasst ist, bei einem ersten Druck P0 zu bersten, während die auf dem kleineren Kreisumfang angeordnete Einkerbung (13) dafür angepasst ist, bei einem von P0 verschiedenen, zweiten Druck P1 zu bersten.

3. Berstscheibe nach Anspruch 1 oder 2, wobei die eine und/oder die andere Einkerbung über ihren Kreisumfang fortlaufend oder unterbrochen ist (sind).

4. Berstscheibe nach einem der vorhergehenden Ansprüche, wobei die Kreisumfänge der beiden Einkerbungen konzentrisch zueinander sind.

5. Berstscheibe nach einem der vorhergehenden Ansprüche, wobei die Kreisumfänge der beiden Einkerbungen auf die Mitte des kreisförmigen Teils zentriert sind.

6. Berstscheibe nach einem der vorhergehenden Ansprüche, wobei das Teil aus einem Stahl besteht, welcher aus ferritischen, martensitischen, ferritischbainitischen, bainitischen, ferritisch-martensitischen, ferritisch-perlitischen, vorzugsweise der Klasse API X80, perlitischen Stählen ausgewählt ist.

7. Berstscheibe nach einem der vorhergehenden Ansprüche, wobei die Tiefe der Einkerbungen kleiner oder gleich einem Wert ist, welcher ungefähr 70% der Dicke des Teils entspricht.

8. Berstscheibe nach einem der vorhergehenden Ansprüche, wobei der Radius am Grund der Einkerbungen zwischen 0,1 und 0,6 mm liegt.

9. Berstscheibe nach einem der vorhergehenden Ansprüche, wobei der Öffnungswinkel der Einkerbungen kleiner als 50° ist.

10. Ausrüstung (5), welche dafür vorgesehen ist, nacheinander zwei Gase unterschiedlicher chemischer Beschaffenheit, wie beispielsweise Helium und Wasserstoff, zu enthalten, aufweisend:
- eine Wand, in welcher eine Öffnung (50) eingebracht ist;
- eine Vorrichtung (4) zum Schutz der Einrichtung gegen Überdrücke, aufweisend:
• eine Berstscheibe (1) nach einem der vorhergehenden Ansprüche, deren untere Fläche in direktem Kontakt mit dem fortlaufenden Druck in der Ausrüstung ist,
• mindestens ein Druckelement (2), welches dafür angepasst ist, die Scheibe mit den Einkerbungen der Scheibe über der Öffnung gegen die Wand zu drücken.

11. Ausrüstung (5) nach Anspruch 10, wobei die Schutzvorrichtung aufweist:
• Dichtungsmittel (6), welche zwischen der Peripherie der Scheibe und der Wand um die Öffnung (50) herum angeordnet ist,
• mindestens ein Halteelement (3), so genannte Verschlusskappe, welches sich an dem Druckelement abstützt und durch Festziehen an der Ausrüstung befestigt ist, so dass das Druckelement und die Berstscheibe an der Ausrüstung gehalten werden und die Dichtigkeit im Bereich der Dichtungsmittel gewährleistet wird.

12. Ausrüstung (5) nach Anspruch 10 oder 11, wobei das Druckelement ein Ring ist, dessen untere Fläche (21) an der oberen Fläche (11) der Scheibe anliegt und dessen Öffnung (23) gegenüber der Öffnung der Wand angeordnet ist.

13. Ausrüstung (5) nach einem der Ansprüche 10 bis 12, aufweisend außerdem Dichtungsmittel (6), welche zwischen der Peripherie des Rings und der Verschlusskappe (3) angeordnet sind.

14. Ausrüstung (5) nach einem der Ansprüche 11 bis 13, wobei die Verschlusskappe und die Ausrüstung jeweils mit einander gegenüber liegenden Gewindelöchern (31, 51) durchbrochen sind, um die Schrauben zum Festziehen der Verschlusskappe an der Ausrüstung aufzunehmen.

15. Verwendung der Ausrüstung nach einem der Ansprüche 10 bis 14, insbesondere als Ausrüstung zur Herstellung und Speicherung von Wasserstoff, um zwei unter Druck stehende Gase mit unterschiedlicher chemischer Beschaffenheit, wie beispielsweise Helium (He) und Wasserstoff (H₂) zu enthalten.

## Claims

1. A rupture disk (1) for a device (4) for protecting against overpressure inside an apparatus (5), the disk (1) consisting of a part of generally circular form, **characterized in that** it comprises two planar faces (10, 11) substantially parallel to one another, and two scores (12, 13) each located on a circumference (C1, C2), the circumferences (C1, C2) of the two scores being different from one another, the score (12) located on the larger circumference being produced on one of the planar faces (10), called bottom face, whereas the score (13) located on the smaller circumference is produced on the other of the planar faces (11), called top face.

2. The rupture disk as claimed in claim 1, the score (13) located on the top face being designed to rupture at a first pressure P0 whereas the score (12) located on the bottom face is designed to rupture at a second pressure P1 different from P0.

3. The rupture disk as claimed in claim 1 or 2, one and/or the other of the scores being continuous or discontinuous over its circumference.

4. The rupture disk as claimed in any one of the preceding claims, the circumferences of the two scores being concentric to one another.

5. The rupture disk as claimed in any one of the preceding claims, the circumferences of the two scores being centered on the center of the circular part.

6. The rupture disk as claimed in any one of the preceding claims, the part being made of a steel chosen from the ferritic, martensitic, ferrito-bainitic, bainitic, ferrito-martensitic, ferrito-perlitic, preferably of API X80 grade, and perlitic steels.

7. The rupture disk as claimed in any one of the preceding claims, the depth of the scores is less than or equal to a value corresponding to approximately 70% of the thickness of the part.

8. The rupture disk as claimed in any one of the preceding claims, the radius at the bottom of the scores is between 0.1 and 0.6 mm.

9. The rupture disk as claimed in any one of the preceding claims, the aperture angle of the scores being less than or equal to 50°.

10. An apparatus (5), intended to contain, in succession, two gases of different chemical nature such as helium and hydrogen, comprising:
- a wall in which an aperture (50) is formed;
- a device (4) for protecting the apparatus against overpressures comprising:
• a rupture disk (1) as claimed in one of the preceding claims, the bottom face of which is in direct contact with the pressure contained in the apparatus,
• at least one bearing element (2), designed to press the disk against the wall with the scores of the disk over the aperture.

11. The apparatus (5) as claimed in claim 10, the protection device comprising:
• sealing means (6) arranged between the periphery of the disk and the wall around the aperture (50),
• at least one holding element (3), called closing cap, bearing against the bearing element, and fixed by tightening to the apparatus so as to hold the bearing element and the rupture disk on the apparatus and ensure the seal at the level of the sealing means.

12. The apparatus (5) as claimed in claim 10 or 11, the bearing element being a ring whose bottom face (21) bears against the top face (11) of the disk and whose aperture (23) is arranged facing the aperture of the wall.

13. The apparatus (5) as claimed in one of claims 10 to 12, further comprising sealing means (6) arranged between the periphery of the ring and the closing cap (3).

14. The apparatus (5) as claimed in one of claims 11 to 13, the closing cap and the apparatus being pierced respectively with tapped holes (31, 51) facing one another to house the screws for tightening the closing cap on the apparatus.

15. The use of the apparatus as claimed in one of claims 10 to 14, notably as a hydrogen production and storage apparatus, to contain, under pressure, two gases of different chemical nature, such as helium (He) and hydrogen (H₂).
